# EUROPEAN PATENT SPECIFICATION

(11) **EP 3 716 163 B1**
(45) Date of publication and mention of the grant of the patent: **28.01.2026**
(21) Application number: 19206222.2
(22) Date of filing: 30.10.2019
(51) Int. Cl.: G06Q 10/00, G06Q 10/08, G06Q 50/40

(54) **METHOD, DEVICE AND STORAGE MEDIUM FOR DISPLAYING INSTRUCTION INFORMATION**
VERFAHREN, VORRICHTUNG UND SPEICHERMEDIUM ZUM ANZEIGEN VON ANWEISUNGSINFORMATIONEN
PROCÉDÉ, DISPOSITIF ET SUPPORT DE STOCKAGE POUR AFFICHER DES INFORMATIONS D'INSTRUCTION

(30) Priority: 28.03.2019 CN 201910245047
(43) Date of publication of application: 30.09.2020
(73) Proprietor: Beijing Xiaomi Mobile Software Co., Ltd., Beijing 100085 (CN)
(72) Inventor: YU, Menghan, Beijing, Beijing 100085 (CN); WANG, Biwen, Beijing, Beijing 100085 (CN); LIU, Yue, Beijing, Beijing 100085 (CN)
(74) Representative: dompatent

(56) References cited:
- WO-A1-2007/018354
- WO-A1-2007/073115
- WO-A1-2018/233664

## Description

### TECHNICAL FIELD

The present disclosure relates to the field of computer technologies, and in particular, to a method, a device, and a storage medium for displaying instruction information.

### BACKGROUND

Traveling by bus is a common way of travel in people's daily life. Users need to pay for the bus first when they take the bus. With the rapid development of computer technology and the widespread use of electronic devices, the use of electronic devices to pay for the cost of travel has become more popular, gradually replacing the traditional way of paying with bus cards, eliminating the need for users to carry bus cards.

The electronic device can be installed a third-party application for a user taking a bus. When the user takes the bus, the third-party application is found. After the third-party application is opened, the electronic device displays the application interface of the third-party application. The user finds the call entry of the ride graphic code on the application interface, and after the call entry is triggered, the electronic device displays the ride graphic code, and the user can pay the ride fee through the ride graphic code.

WO 2018/233644 A1 discloses systems and methods for route planning.

WO 2007/018354 A1 discloses a method and apparatus for providing traffic information for a public transportation means, such as a bus, and utilizing the provided information.

WO 2007/073115 A1 discloses a method and apparatus for confirming a real-time location.

### SUMMARY

The present disclosure provides a method, a device, and a storage medium for displaying instruction information, which can overcome problems in existing technologies. The present invention is defined by the appended claims. Preferred embodiments are included as dependent claims.

Beneficial effects brought by the technical solutions provided by the embodiments of the present disclosure include one or more of the followings.

In the method, the device, and the storage medium for displaying instruction information provided in the embodiments of the present disclosure, by obtaining current status information of an electronic device, obtaining indication information, when the status information satisfies public transportation travel conditions, wherein the indication information is used to indicate a manner of performing a resource transfer operation when the user rides on a public transportation vehicle, and displaying the indication information on a designated interface, the manner of performing the resource transfer operation can be determined by the displayed indication information when the user needs to take the public transportation vehicle, thereby performing the resource transfer operation to facilitate the user to take the public transportation vehicle. The user does not need to perform multiple steps, thereby improving the operation efficiency and reducing the requirements for users.

Moreover, the indication information is associated with an interface link of an application interface where the ride graphic code is located, or, when the indication information is associated with the activation entry of the virtual ride card, the application interface where the ride graphic code is located can be directly located through the indication information. Or the function of directly positioning to activate the virtual ride card makes the user perform the simple operation of triggering the indication information to display the ride graphic code or activate the virtual ride card, simplifying the jump operation on the multi-level interface, and improving the operation effectiveness.

### BRIEF DESCRIPTION OF THE DRAWINGS

The accompanying drawings, which are incorporated in the specification and constitute a part of the specification, show exemplary embodiments of the present disclosure. The drawings along with the specification explain the principles of the present disclosure.
FIG. 1 is a schematic structural diagram of an electronic device according to an exemplary embodiment;
FIG. 2 is a flowchart of a method for displaying indication information according to an exemplary embodiment;
FIG. 3 is a flowchart of a method for displaying indication information according to an exemplary embodiment;
FIG. 4 is a schematic diagram of a designated interface according to an exemplary embodiment;
FIG. 5 is a flowchart of another method for displaying indication information according to an exemplary embodiment;
FIG. 6 is a schematic structural diagram of a device for displaying indication information according to an exemplary embodiment;
FIG. 7 is a schematic structural diagram of another device for displaying indication information according to an exemplary embodiment;
FIG. 8 is a block diagram of an electronic device according to an exemplary embodiment.

### DETAILED DESCRIPTION

In order to make objects, technical solutions and advantages of the present disclosure more clear, the embodiments of the present disclosure will be further described in detail below with reference to the accompanying drawings.

Before explaining the embodiments of the present disclosure in detail, the concepts involved in the embodiments of the present disclosure are briefly introduced:
1. Designated interface: an information presentation interface on an electronic device for aggregating and displaying various types of information.

The designated interface may be the main interface of the electronic device, or an application interface of the installed application, and may be other interfaces than the main interface of the electronic device and the application interface of the installed application, such as a minus one screen or minus-one screen interface. The minus one screen interface may be the leftmost interface among the plurality of interfaces arranged in order, the main interface is located on the right side of the minus one screen interface, and the minus one screen interface may be called when the right sliding operation is performed on the main interface.

The designated interface may include multiple display areas: a presentation area, a shortcut function area, and a dynamic information area. Wherein, the presentation area can present some common information, such as time information, weather information, etc.; the shortcut function area can display multiple function options, such as the startup option of the application, the startup option of an application interface in the application, and the startup option of the tool, such as the start-up option of the sweep function; the dynamic information area can present recommended dynamic information, such as popular merchandise, train tickets, movie tickets, schedule information, stock quotes, travel strategies, and so on.

2. Indication information: information used for indicating a manner of performing a resource transfer operation when the user rides on a public transportation vehicle, and the indication information may be a ride graphic code, information associated with an application interface where the ride graphic code is located, and information associated with the activation entry of the virtual travel card or other information.

When the user rides on the public transportation vehicle, the resource transfer operation is performed by displaying the ride graphic code or providing the virtual travel card, thereby transferring resources to the owner of the public transportation vehicle.

3. Public transportation vehicles: vehicles for users to ride without limiting the user's identity, such as buses, subways or other public transportation vehicles.

The public transportation vehicle has a specific driving route, and the specific driving route may be provided with a plurality of public transportation vehicles for people to ride, and the driving routes corresponding to different public transportation vehicles may be the same or different.

A specific driving route includes a plurality of public stations, and the public transportation vehicle travels according to the specific driving route, and stops at a specific public station during driving to allow people to get on or off the vehicle.

The specific driving route may include an upward travel route and a downward travel route, and the public transportation vehicle may alternately travel according to the prescribed upward driving route and the downward driving route, and the upward driving route and the downlink driving route include the same public stations, but the traveling direction is opposite. Alternatively, the upward travel route and the downward travel route are different, and accordingly, the public travel stations included in the upward travel route and the downward travel route are also different.

4. Public transportation travel mode: referring to the mode where users travel by public transportation vehicles.

When the user wants to travel, he waits at a public station. When the public transportation vehicle arrives at the public station and stops at the public station, the user gets on the bus until the public transportation vehicle arrives at another public station and stops at the public station, and the user gets off and finishes the trip.

5. Public transportation application: refers to an application that can provide a ride graphic code or a virtual ride card.

Developers of public transportation applications negotiate with owners of public transportation vehicles to provide ride graphic code or virtual ride cards in public transport applications, while devices configured on public transport vehicles can scan graphics or use wireless communication technology or the like to recognize the ride graphic code or the virtual ride card, so that the resource transfer operation can be performed with use of the ride graphic code or the virtual ride card, and the user's resources are transferred to the owner of the public transportation vehicle.

The public transportation application can be an application running in an operating system of the electronic device, or a third-party application that can be installed for the electronic device.

The inventors of the present disclosure have recognized that, a conventional mobile phone user may have to perform multiple steps such as finding a third-party application and opening a third-party application to display the ride graphic code, which is inefficient and has high requirements on the user.

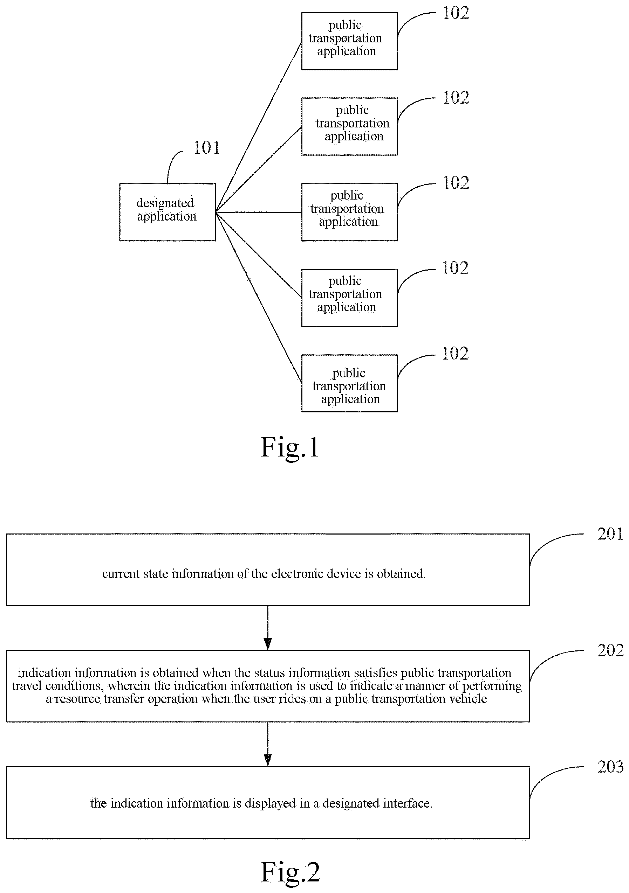

FIG. 1 is a schematic structural diagram of an electronic device according to an exemplary embodiment. Referring to FIG. 1, the electronic device includes a designated application 101 and a plurality of public transportation applications 102, wherein the designated application 101 is coupled to the plurality of public transportation applications 102 respectively.

The designated application 101 is used to control the display of the specified interface, and the plurality of public transportation applications 102 can provide a ride graphic code or a virtual ride card, and can also provide an interface for the designated application 101, and the designated application 101 calls the interface of the public transportation application 102, so that the public transportation application 102 can interact with the designated application 101.

In the embodiment of the present disclosure, the designated application 101 displays the indication information in the designated interface, and the indication information is associated with the ride graphic code or the virtual ride card of the public transportation application 102. By triggering the indication information, the ride graphic code can be displayed on the designated interface or the virtual ride card can be activated through the designated interface.

FIG. 2 is a flowchart of a method for displaying indication information according to an exemplary embodiment. Referring to FIG. 2, the method is applied to an electronic device, and the method includes:
In step 201, current state information of the electronic device is obtained.
In step 202, indication information is obtained, when the status information satisfies public transportation travel conditions, wherein the indication information is used to indicate a manner of performing a resource transfer operation when the user rides on a public transportation vehicle;
In step 203, the indication information is displayed on a designated interface.

In the method provided by the embodiment of the present disclosure, by obtaining current status information of an electronic device, obtaining indication information when the status information satisfies public transportation travel conditions, wherein the indication information is used to indicate a manner of performing a resource transfer operation when the user rides on a public transportation vehicle, and displaying the indication information on the designated interface, the manner of performing the resource transfer operation can be determined according to the displayed indication information when the user needs to take the public transportation vehicle, thereby enabling the user performing the resource transfer operation to facilitate the user to take the public transportation vehicle. Moreover, the user does not need to perform multiple steps, thereby improving the operation efficiency and reducing the requirements on users.

In one possible implementation, the status information satisfies the public transportation travel conditions including at least one of the following:
current time belongs to a preset time period;
a current location is within a preset range of a starting station in travel habit information, and the travel habit information includes a starting station and an ending station of the public transportation vehicle;
a current motion state is a state not riding.

In another possible implementation, the indication information is a ride graphic code for performing a resource transfer operation when the user rides on the public transportation vehicle.

In another possible implementation, the method further includes:
obtaining an interface link associated with the indication information when receiving a triggering instruction for the indication information; and
displaying an application interface corresponding to the interface link, wherein the application interface includes the ride graphic code for performing a resource transfer operation when the user rides on the public transportation vehicle.

In another possible implementation manner, the obtaining an interface link associated with the indication information when receiving a triggering instruction for the indication information includes:
displaying prompt information, when the triggering instruction for the indication information is received for the first time, wherein the prompt information is used to prompt the application interface associated with the indication information to be displayed in the designated interface; and
obtaining the interface link associated with the indication information, when a confirmation operation on the prompt information is detected.

In another possible implementation manner, the method further includes:
obtaining an activation entry associated with the indication information when the triggering instruction for the indication information is received; and
activating a virtual ride card for performing the resource transfer operation when the user rides on the public transportation vehicle through the activation entry.

In another possible implementation manner, the obtaining an activation entry associated with the indication information when the triggering instruction for the indication information is received includes:
displaying the prompt information, when the triggering instruction for the indication information is received for the first time, where the prompt information is used to prompt activating the virtual ride card associated with the indication information; and
obtaining the activation entry associated with the indication information when the confirmation operation on the prompt information is detected.

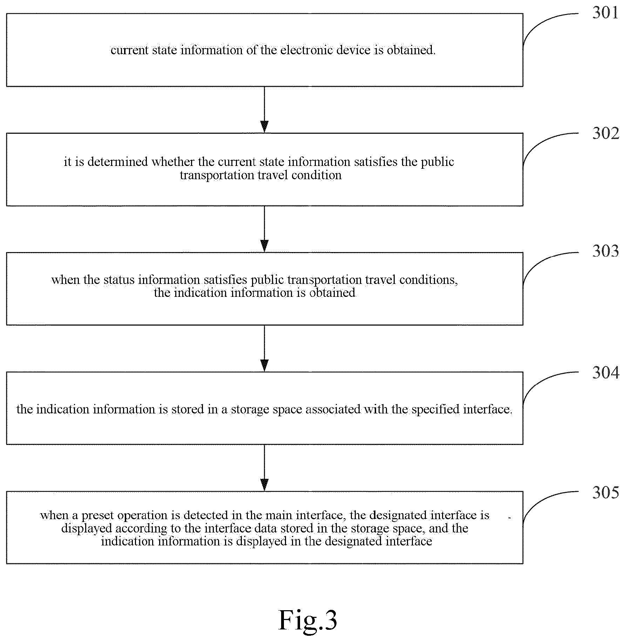

FIG. 3 is a flowchart of a method for displaying indication information according to an exemplary embodiment. Referring to FIG. 3, applied to an electronic device, the method can includes the following operation.

In step 301, current state information of the electronic device is obtained.

Wherein, the status information is used to indicate the current state of the electronic device, and the current state of the electronic device can be determined according to the status information. The current state of the electronic device can represent the current state of the user.

The status information includes location information, time information, motion information, and the like. The location information is used to indicate the current location of the electronic device, that is, the current location of the user. The location information may be obtained by using GPS (Global Positioning System) for positioning, or may be obtained by the positioning based on a base station, or may be obtained by the positioning based on the Beidou system, or may be obtained by the positioning based on LBS (Location Based Service), etc.

The time information is used to indicate the current time of the electronic device and can be provided by a clock configured in the electronic device.

The motion information is used to indicate the current motion state of the electronic device. Since the electronic device is carried by the user, the motion information can also be used to indicate the current motion state of the user. The motion state may include information such as acceleration, speed, or gesture of the electronic device. The motion state may be a walking state, a stationary state, a riding state, and the like, wherein both the walking state and the stationary state belong to a non-riding state.

Wherein, the motion information can be collected by the gravity sensor set in the electronic device, and the gravity sensor can collect the current acceleration data of the electronic device, obtain feature data by extracting features on the collected acceleration data, classify the feature data by using a classification algorithm, and determine the current motion state of the electronic device.

In step 302, it is determined whether the current state information satisfies the public transportation travel condition.

In daily life, the same user's travel may include walking, traveling by public transportation or driving, and the like, and the travel habits of different users are also different. Therefore, in order to make a recommendation according to the travel habit information of the user, it is necessary to first obtain the travel habit information of the user.

The way to obtain user travel habits may include at least one of the following:

### Method 1: obtaining the travel habit information provided by the third-party server

Third-party applications that help users travel, such as map applications, public transportation applications, etc., can be installed in electronic devices, and the third-party applications are associated with third-party servers.

In one possible implementation, in the user's daily travel, the user may typically set travel information on the public transportation application to obtain a travel strategy through the public transportation application, and the travel information includes a starting location and an ending location.

Therefore, the third-party server can collect the travel information input by the user multiple times, and statistically analyze the travel information collected to obtain the travel habit information that can reflect the user's personal travel habits.

In another possible implementation manner, the user can set a common starting location and an ending location in the third-party application. For example, the location of the home and the location of the company are set in the third-party map application, and the third-party server can obtain the common starting location and ending location of the user, and obtain the travel habit information including the starting location and the ending location.

### Method 2: obtaining the travel habit information set by the user

The electronic device displays a designated interface, and the designated interface includes a travel habit setting area, and the user can input the travel habit information in the travel habit setting area, and the electronic device obtains the travel habit information input by the user.

The travel habit setting area includes a starting location setting area and an ending location setting area, the user can input a starting location in the starting location setting area, and input the ending location in the ending location setting area, and the electronic device can obtain the travel habit information including the starting location and the ending location.

In addition, the travel habit setting area may further include a travel time setting area, and the user may set one or more preset departure times in the travel time setting field, and the electronic device obtains a preset departure time period including the preset departure time according to the preset departure time set by the user, to obtain the travel habit information including the starting location, the ending location, and the preset departure time period.

Alternatively, the travel habit setting area may further include a travel mode setting area, and the user may set the specified travel mode in the travel mode setting area, and the electronic device obtains the travel habit information including the starting location, the ending location, and the specified travel mode.

### Method 3: obtaining a historical travel record of the user, wherein the historical travel record includes a plurality of travel routes, and statistically analyzing the historical travel record to obtain travel habit information

During the travel process of the user, the electronic device performs positioning, and recording the location of the electronic device can obtain a historical travel record of the user, wherein the historical travel record includes multiple travel routes of the user, and each travel route includes at least a starting location and a ending location, and statistically analyze are performed on the plurality of travel routes to obtain the travel habit information of the user.

Through one or more of the above methods, the travel habit information of the user can be obtained, and the travel habit information can include the travel habits of the user in various travel modes.

In the embodiment of the present disclosure, in order to facilitate the user to display the indication information for riding the public transportation vehicle when the user wants to take the public transportation vehicle, the travel habit information for taking the public transportation vehicle may be obtained, and the public transportation conditions are determined according to the obtained travel habit information. Since the travel habit information can reflect the personal habits and personal preferences of the user when traveling, the determined public transportation travel conditions can reflect when the user is riding the public transportation vehicle, that is, when the current state information of the electronic device satisfies the public transportation travel conditions, it can be determined that the user needs to take the public transportation vehicle, and the indication information is displayed for the user.

The travel habit information includes at least a starting public station and an ending public station corresponding to each other, and may further include information such as a preset departure time period.

In a possible implementation manner, the current state information satisfying the public transportation travel condition may include at least one of the following:
1. The current time belongs to the preset time period.

The preset time period may be a preset departure time period determined in the travel habit information, or the preset time period may be a time period set by the user, or may be a time period set by the electronic device by default, such as the default setting of the peak hours on duty or the peak hours off duty, etc.

For example, the preset time period may be a time period when the user goes to work every day, or a time period when the user gets off work every day, or may also be other time periods. For example, the time period may be 7:00am to 8:30am every day or also be from 5:30pm to 6:30pm in the evening, or it can be other time periods.

The preset time period is used to indicate a common time period for the user to take the public transportation vehicle, during which the user may need to take the public transportation vehicle.

Therefore, the electronic device obtains the current time, and when the current time belongs to the preset time period, it is determined that the current state meets the public transportation condition, and the user may need to take the public transportation vehicle, and then step 303 is continued, while the current time does not belong to the preset time period, it is determined that the current state does not satisfy the public transportation travel condition, and the user does not need to take the public transportation vehicle, and the following step 303 is not continued at this time.

2. The current location is within the preset range of the starting station in the travel habit information.

When the user is within the preset range of the starting station of the public transportation vehicle, it can be considered that the user needs to take public transport vehicles. Therefore, the preset range of the starting station can be used as a public transportation travel condition. The electronic device obtains the current location. When the current location is within the preset range of the starting station, it is determined that the current state meets the public transportation travel condition, and the user may need to take the public transportation vehicle, then the step 303 is continued at this time, while the current location is not within the preset range of the start station, it is determined that the current state does not satisfy the public transportation travel condition, and the user does not need to take the public transportation vehicle, and the following step 303 is not continued at this time.

3. The current state of motion is the state of not riding.

When the state of not riding is as a public transportation travel condition, and the current motion state of the electronic device is determined to be a walking state or a stationary state according to the motion information, that is, the state of not riding indicates that the user has not taken the public transportation vehicle yet, then it is determined that the current state meets the public transportation travel condition, and the user may need to take the public transportation vehicle, then the step 303 is continued at this time, while when the current state is a riding state, it is determined that the current state does not satisfy the public transportation travel condition, and the user does not need to take the public transportation vehicle, and the following step 303 is not continued at this time.

It should be noted that when the state information satisfies any one of the above three public transportation travel conditions, the state information is determined to satisfy the public transportation travel condition. Alternatively, when the state information simultaneously satisfies any two of the three public transportation conditions, the state information is determined to satisfy the public transportation condition. Alternatively, when the state information satisfies the above three public transportation travel conditions at the same time, it is determined that the state information satisfies the public transportation travel condition.

In step 303, when the status information satisfies the public transportation travel condition, the indication information is obtained.

When the status information satisfies the public transportation travel condition, the electronic device obtains the indication information to be displayed on the designated interface for the user to use, wherein the indication information is used to indicate a manner of performing a resource transfer operation when the user rides on a public transportation vehicle.

The indication information may be a ride graphic code, and the ride graphic code may be a two-dimensional code or a barcode, or other forms of graphic code. Alternatively, the indication information is information associated with an interface link of an application interface where the ride graphic code is located, or the indication information is information associated with an activation entry of the virtual ride card. And the ride graphic code and the virtual ride card are both used to perform a resource transfer operation when the user takes the public transportation vehicle.

In one possible implementation, the indication information may be an icon associated with an interface link of the application interface or associated with an activation entry of the virtual ride card.

In another possible implementation manner, the ride graphic code carries an account identifier, wherein the account identifier is used to represent a resource account of the user, and a resource transfer operation may be performed on the resource account by displaying the ride graphic code. Alternatively, the virtual ride card carries an account identifier, and the account identifier is used to represent a resource account of the user, and a resource transfer operation may be performed on the resource account by providing the virtual ride card.

In step 304, the indication information is stored in a storage space associated with the designated interface.

In step 305, when a preset operation is detected on the main interface, the designated interface is displayed according to the interface data stored in the storage space, and the indication information is displayed on the designated interface.

The electronic device is provided with a storage space in which the interface data of the designated interface is stored, the interface data is used to describe the designated interface, the electronic device extracts the interface data from the storage space, and the designated interface can be displayed based on the interface data.

Therefore, the electronic device stores the indication information in the storage space. When the preset operation is detected on the main interface and the designated interface is to be displayed, the interface data including the indication information is extracted from the storage space, and since the interface data includes the indication information, the indication information can be displayed on the designated interface based on the interface data.

In a possible implementation manner, the designated interface includes at least one of a first information display area, a second information display area, and a third information display area.
1. The first information display area: being called as a shortcut function area

The first information display area is for displaying one or more function options for the user to use.

Function options can include startup options for the application, startup options for the application interface, and startup options for the tool.

The startup option for the application is used to launch the application, which can be the application icon or startup button of the application. When the user triggers the startup option, the electronic device can launch the application.

The startup options for the application interface is used to launch the application interface, and the application interface may be an interface running in an operating system of the electronic device, or an interface running in a public transportation application, such as a permission setting interface running in the operating system or the chat interface in the chat application. When the user triggers the startup option, the electronic device can start the application interface, that is, it is not necessary to display the main interface or other interface of the application to which the application interface belongs, and the application interface is directly displayed.

The startup options for the tool is used to launch the tool, which can be a sweep, calculator, alarm, memo, etc., when the user triggers the startup option, the tool is launched.

2. The second information display area may be referred to as a dynamic information area.

The dynamic information area is used to display dynamic information recommended by the electronic device for the user, such as popular news, popular merchandise, train tickets, movie tickets, schedule information, stock quotes, travel strategies, and the like. The user can view the dynamic information, and can also trigger the dynamic information to enter the display interface of the dynamic information. The display interface includes the description information of the dynamic information, and the user can learn the details of the dynamic information on the display interface, and one or more operations can be triggered to process the objects involved in the dynamic information.

For example, the dynamic information is a popular merchandise, and the user clicks on the popular merchandise to enter the display interface of the popular merchandise, and the display interface includes description information about the type, price, size, and style of the popular merchandise to describe the merchandise from all aspects, and the user can view the description information and also trigger an operation to purchase the merchandise.

The recommended dynamic information may be updated over time or according to the triggering operation of the user, and the electronic device updates the displayed dynamic information in the second information display area to display the updated dynamic information.

3. The third information display area: being referred to as a display area. The third information display area may display information commonly used by the user, such as time information, weather information, and number of motion steps. And the type of information displayed in the third information display area may be set by the electronic device by default or set by the user.

It should be noted that other information display areas may be included on the designated interface, and other types of information may also be displayed, and details are not described herein. Moreover, the information on the designated interface may be provided by the operating system of the electronic device, or provided by a public transportation application installed on the electronic device, or may be provided by other channels. By integrating the information provided by one or more channels, the information is displayed on sub-areas of the designated interface, achieving the aggregation display of various types of information and ensuring the rationality, which is convenient for the user to view these all together.

The plurality of information display areas may be arranged in a predetermined manner when the designated interface includes a plurality of information display areas, and the predetermined manner may be a top-to-bottom manner or other manners, which is not limited by the present embodiment.

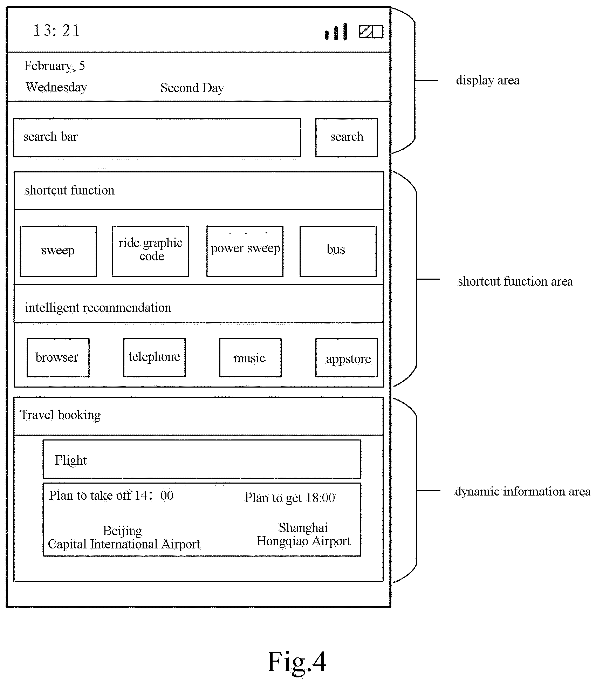

In this embodiment, the indication information can be displayed in any information display area of the designated interface. For example, FIG. 4 is a schematic diagram of a designated interface according to an exemplary embodiment. Referring to FIG. 4, the designated interface includes a presentation area, a shortcut function area, and a dynamic information area. When the electronic device obtains the call entry of the ride graphic code, the call entry of the ride graphic code is displayed in the shortcut function area.

In addition, the main interface is an interface that is automatically displayed when the electronic device is turned on or unlocked. This embodiment is only described by taking a preset interface triggered by a preset operation on the main interface as an example. When the user needs to take the public transportation vehicle, the preset operation is triggered on the main interface, and the electronic device can detect the preset operation in the main interface to switch from displaying the main interface to displaying the designated interface.

In a possible implementation manner, the designated interface is a minus one screen located on the left side of the main interface. When the electronic device displays the main interface and the right sliding operation is detected, the designated interface is displayed, or the designated interface is located on the right side of the main interface. When the electronic device displays the main interface and the left sliding operation is detected, the designated interface is displayed. In another possible implementation manner, the electronic device is provided with a preset button, which may be a physical button or a virtual button. When the triggering operation on the preset button is detected, the designated interface is displayed.

By adopting the above trigger mode, the designated interface can be called out by one button, and the operation is very simple, and the user can quickly view the information displayed on the designated interface.

In another embodiment, the designated interface may also be a main interface, or may be another form of interface.

It should be noted that, this embodiment is only an example that the designated interface has not been displayed when the current state information meets the public transportation travel conditions, thus after obtaining the indication information, the electronic device performs the above step 304 and then performs the above step 305. In another embodiment, if the electronic device is displaying the designated interface, and when the current status information is determined to meet the public transportation travel conditions, the designated interface may be refreshed to display the obtained indication information in the designated interface.

Another point that needs to be explained is that this embodiment is only an example t when the current state information meets the public transportation travel conditions. As time passes or position changes or state changes, the current state information of the electronic device will no longer meet the public transportation conditions. At this time, the electronic device deletes the indication information on the designated interface, and does not display the indication information on the designated interface.

The electronic device displays the indication information on a designated interface, and the indication information can be processed. The indication information may include multiple types indication information, and for the different types indication information, the processing methods are also different.

In a first possible implementation, when the indication information is a ride graphic code for performing a resource transfer operation when the user rides the public transportation vehicle, the electronic device directly displays the ride graphic code on the designated interface.

The ride graphic code may carry an account identifier, and when the scanning device configured on the public transportation vehicle scans the ride graphic code, the account identifier carried in the ride graphic code is obtained, and a resource transfer request is sent to the connected server, wherein the resource transfer request carries the account identifier and the number of resource, i.e. any kind of currency or token or value points or the like, to be transferred. When the server receives the resource transfer request, the server deducts the resource corresponding to the number of resource from the resource account corresponding to the account identifier, and adds the resource corresponding to the number of resource to the resource account corresponding to the public transportation vehicle, wherein the resource account corresponding to the public transportation vehicle is a resource account configured for the public transportation vehicle owner, such as a resource account of the bus company.

Wherein, the ride graphic code can be provided by a public transportation application, and in order to ensure the security of the user's resource account, the public transportation application periodically updates the ride graphic code, and each time the electronic device can obtain the updated ride graphic code provided by the public transportation application, and the updated ride graphic code is displayed on the designated interface. Or, in order to ensure security and avoid other users operating the electronic device, each time the electronic device obtains the updated driving graphic code, the electronic device does not display the updated driving graphic code, but displays a password input window, and requests the user to enter the password of the electronic device, and the updated driving code will be displayed only when the correct password entered by the user is obtained.

In a second possible implementation, when the indication information is associated with an interface link of an application interface where the ride graphic code is located, the electronic device displays the indication information on the designated interface. When the triggering instruction for the indication information is received, the interface link associated with the indication information may be obtained, and the application interface corresponding to the interface link is displayed. And the application interface includes a ride graphic code for performing a resource transfer operation when the user rides on a public transportation vehicle.

The interface link is used to determine a unique corresponding application interface, which may be a URI (Uniform Resource Location) or other address of the application interface.

The ride graphic code may carry an account identifier, and when the scanning device configured on the public transportation vehicle scans the ride graphic code, the account identifier carried in the ride graphic code is obtained, and a resource transfer request is sent to the connected server, wherein the resource transfer request carries the account identifier and the number of resource to be transferred. When the server receives the resource transfer request, the server deducts the resource corresponding to the number of resource from the resource account corresponding to the account identifier, and adds the resource corresponding to the number of resource to the resource account corresponding to the public transportation vehicle, wherein the resource account corresponding to the public transportation vehicle is a resource account configured for the public transportation vehicle owner, such as a resource account of the bus company.

Alternatively, before the electronic device displays the application interface, the user performs a confirmation firstly. When the electronic device receives the triggering instruction for the indication information for the first time, the prompt information is displayed, and the prompt information is used to display an application interface associated with the indication information on the designated interface, and the user views the prompt information on the designated interface. When it is determined that the application interface is allowed to be displayed on the designated interface, the confirmation operation on the prompt information is performed. When the electronic device detects the confirmation operation on the prompt information, the interface link associated with the indication information is obtained, so that the application interface corresponding to the interface link is displayed in the designated interface. In this way, the designated interface can be granted permission to display the application interface. When the electronic device receives the triggering instruction for the indication information again subsequently, there is no need to display the prompt information again. The interface link associated with the indication information is obtained directly and the application interface corresponding to the interface link is displayed on the specified interface

Alternatively, in order to ensure security and avoid other users operating the electronic device, when the electronic device displays the prompt information, the prompt information may include a password input window, and the user is required to input the password of the electronic device. And only when the confirmation operation on the prompt information is detected and the correct password input by the user is obtained, the interface link associated with the indication information is obtained, and the application interface corresponding to the interface link is displayed on the designated interface.

Moreover, when the electronic device displays the corresponding application interface according to the interface link, the interaction logic of the application interface is not changed. For example, the interaction logic of the application interface stipulates that each time the application interface is displayed, the identity verification is required. Then when the electronic device displays the application interface, the content on the application interface is not directly displayed, but the password input window is displayed first, and the user is required to input a password for displaying the application interface, and the content on the application interface is displayed only when the correct password input by the user is obtained, thereby displaying the ride graphic code on the application interface for the user to use.

In a third possible implementation, when the indication information is associated with the activation entry of the virtual ride card, the electronic device displays the indication information on the designated interface, and when the triggering instruction for the indication information is received, the activation entry associated with the indication information is obtained, and a virtual ride card for performing a resource transfer operation when the user rides on the public transportation vehicle is activated through the activation entry.

At this time, the electronic device transmits a wireless signal by using a wireless communication technology, and the wireless signal carries an account identifier. When the reading device configured on the public transportation vehicle receives the wireless signal, the account identifier carried in the wireless signal is obtained, a resource transfer request is sent to the connected server, wherein the resource transfer request carries the account identifier and the number of resource to be transferred. When the server receives the resource transfer request, the server deducts the resource corresponding to the number of resource from the resource account corresponding to the account identifier, and adds the resource corresponding to the number of resource to the resource account corresponding to the public transportation vehicle, wherein the resource account corresponding to the public transportation vehicle is a resource account configured for the public transportation vehicle owner, such as a resource account of the bus company.

The electronic device and the reading device can interact via wireless communication technology. The wireless communication technology may be NFC (Near Field Communication), Bluetooth or other wireless communication technologies.

Alternatively, before the electronic device activates the virtual ride card, the user performs a confirmation firstly. When the electronic device receives the triggering instruction for the indication information for the first time, the prompt information is displayed, and the prompt information is used to prompt the activation of the virtual ride card associated with the indication information, and the user views the prompt information on the designated interface. When it is determined that the virtual ride card is allowed to be activated, the confirmation operation on the prompt information is performed. When the electronic device detects the confirmation operation on the prompt information, the activation entry associated with the indication information is obtained, so that the virtual ride card is activated through the activation entry. In this way, the designated interface can be granted permission to activate the virtual ride card. When the electronic device receives the triggering instruction for the indication information again subsequently, there is no need to display the prompt information again. The activation entry associated with the indication information is obtained directly and the virtual ride card is activated through the activation entry.

Alternatively, in order to ensure security and avoid other users operating the electronic device, when the electronic device displays the prompt information, the prompt information may include a password input window, and the user is required to input the password of the electronic device. And only when the confirmation operation on the prompt information is detected and the correct password input by the user is obtained, the activation entry associated with the indication information is obtained, and the virtual ride card is activated through the activation entry.

Moreover, when the electronic device activates the virtual ride card through the activation entry, the interaction logic of the virtual ride card is not changed. For example, the interaction logic of the virtual ride card stipulates that each time the virtual ride card is activated, the identity verification is required. Then when the electronic device obtains the activation entry, the virtual ride card is not directly activated through the activation entry, but the password input window is displayed first, and the user is required to input a password for activating the virtual ride card, and the virtual ride card is activated through the activation entry only when the correct password input by the user is obtained for the user to use.

It should be noted that the above embodiment is only described by taking one piece of indication information as an example. In another embodiment, the electronic device may obtain multiple indication information, and display multiple indication information on the designated interface, and each indication information can be associated with the interface link or associated with the activation entry of the virtual ride card, so that the user can be provided with multiple ways to perform the resource transfer operation for the user to select, and the user can select one of the multiple indication information. Further, the user can ride on the public transportation vehicle with the ride graphic code or the virtual ride card provided by the instruction information.

Alternatively, the electronic device displays one of the indication information on the designated interface, and displays the remaining indication information on the detail interface associated with the designated interface. When the operation of triggering the detail interface is detected on the designated interface, the detail interface is displayed, and the remaining indication information is displayed on the detail interface for the user to use the indication information. The operation of triggering the detail interface may be a click operation, a sliding operation on a designated interface, or a click operation on a detail button in a designated interface.

Alternatively, the electronic device may obtain the indication information that matches the current state information, and display the selected indication information on the designated interface for the user to use. For example, if the electronic device has obtained the ride graphic code applicable to different geographical regions, then the current location is obtained, and an interface link of the application interface of the geographic region to which the current location belongs is determined, and the indication information associated with the interface link is obtained and displayed on the designated interface without displaying the indication information corresponding to the ride graphic code of the other geographical area. Alternatively, the electronic device has obtained the virtual ride card applicable to different geographic regions, then the current location is obtained, and the activation entry of the virtual ride card of the geographic region to which the current location belongs is determined, the indication information associated with the activation entry is obtained and displayed on the designated interface without displaying the indication information corresponding to the virtual ride card of the other geographical area. In this way, the number of indication information can be reduced, and the user can be provided with suitable indication information, and the displayed indication information can be updated in time according to the change of the user's location, which satisfies the user's needs and facilitates the user's riding operation.

Alternatively, each time the electronic device uses the ride graphic code or the virtual ride card to perform the resource transfer operation, a resource transfer operation record is generated, and the resource transfer operation record may indicate that the ride graphic code or the virtual ride card is used one time. Therefore, the electronic device can obtain the frequency of use or the number of uses of each of the ride graphic codes and the frequency of use or the number of uses of each virtual ride card according to the generated resource transfer operation record.

The electronic device can obtain the frequency of use of each of the ride graphic codes and the frequency of use of each virtual boarding card, and the obtained frequency of use is sorted. The indication information corresponding to the ride graphic code or the virtual ride card with the highest frequency of use is selected, and displayed on the designated interface. Alternatively, the electronic device can obtain the number of uses of each of the ride graphic codes and the number of uses of each of the virtual ride cards, the obtained number of uses is sorted. The indication information corresponding to the passenger graphic code or the virtual ride card with the highest number of uses is selected, and displayed on the designated interface.

By selecting the ride graphic code or the virtual ride card with the highest frequency of use or the number of times of use, the indication information that the user most wants to use can be determined, thereby displaying the indication information on the designated interface to satisfy the user's needs.

In addition, when the interface link of the application interface where the ride graphic code is located is updated, or the activation entry of the virtual ride card is updated, the interface link or the activation entry associated with the indication information may be updated, thereby ensuring the accuracy of the interface link or the activation entry, without a failure of the interface link or the activation entry.

The DeepLink technology is used in the embodiment of the present disclosure. The DeepLink technology refers to that certain information displayed in an electronic device is associated with an application interface of an application, thereby positioning the application interface. By triggering the information, the application interface can be directly displayed without first entering the application's main interface and then entering the application interface. Alternatively, certain information displayed in the electronic device is associated with a certain function of an application, thereby locating the function. By triggering the information, the function can be directly activated without first entering the activation interface of the function through multi-level operation.

The electronic device establishes the association relationship between the indication information and the interface link or activation entry, so that the established association relationship can directly locate the application interface where the ride graphic code is located, or directly locate the function of activating the virtual ride card, so that the user can perform simple operations of triggering the indication information to display the ride graphic code or activate the virtual ride card, which simplifies the jump operation on the multi-level interface and improves the operation efficiency.

In the method provided by the embodiment of the present disclosure, by obtaining current status information of an electronic device, obtaining indication information, when the status information satisfies public transportation travel conditions, wherein the indication information is used to indicate a manner of performing a resource transfer operation when the user rides on a public transportation vehicle, and displaying the indication information on a designated interface, the manner of performing the resource transfer operation can be determined by the displayed indication information when the user needs to take the public transportation vehicle, thereby performing the resource transfer operation to facilitate the user to take the public transportation vehicle. The user does not need to perform multiple steps, thereby improving the operation efficiency and reducing the requirements for users.

Moreover, the indication information is associated with an interface link of an application interface where the ride graphic code is located, or, when the indication information is associated with the activation entry of the virtual ride card, the application interface where the ride graphic code is located can be directly located through the indication information. Alternatively, the function of directly positioning to activate the virtual ride card makes the user perform the simple operation of triggering the indication information to display the ride graphic code or activate the virtual ride card, simplifying the jump operation on the multi-level interface, and improving the operation effectiveness.

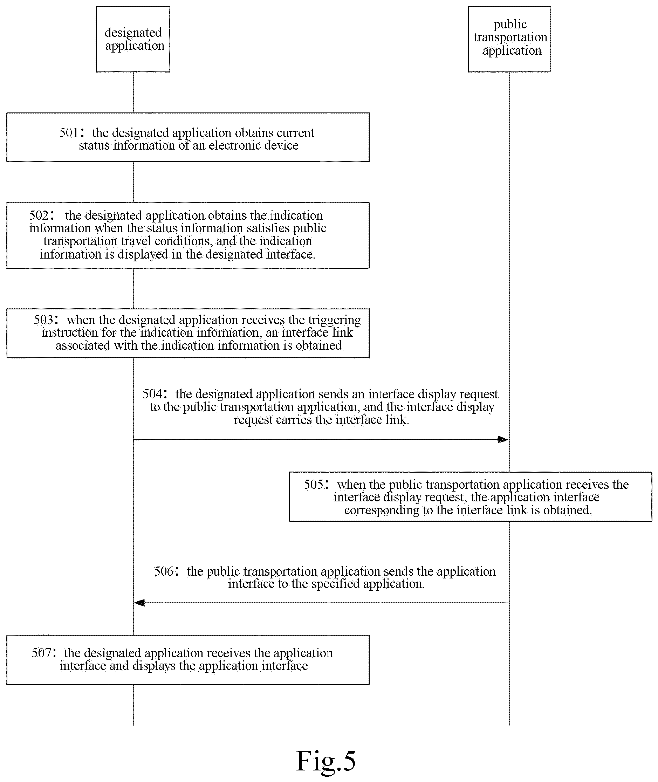

FIG. 5 is a flowchart of another method for displaying indication information according to an exemplary embodiment. Referring to FIG. 5, the electronic device includes a designated application and a public transportation application, the designated interface being controlled by the designated application. The method includes:
In step 501, the designated application obtains current status information of an electronic device.

The operating system of the electronic device provides an interface for the designated application, and the designated application can obtain the current state information by calling an interface provided by the operating system. For example, the designated application calls the interface of the gravity sensor, so that the current motion information can be obtained.

In step 502, the designated application obtains the indication information when the status information satisfies public transportation travel conditions, and the indication information is displayed on the designated interface.

When the designated application obtains the current status information, it determines whether the status information satisfies the public transportation travel condition. If the public transportation travel condition is satisfied, the indication information is obtained and displayed on the designated interface. If not, the indication information is not obtained.

In step 503, when the designated application receives the triggering instruction for the indication information, an interface link associated with the indication information is obtained.

In step 504, the designated application sends an interface display request to the public transportation application, and the interface display request carries the interface link.

In step 505, when the public transportation application receives the interface display request, the application interface corresponding to the interface link is obtained.

In step 506, the public transportation application sends the application interface to the designated application.

In step 507, the designated application receives the application interface and displays the application interface.

The public transportation application sets the ride graphic code, and displays the ride graphic code on the application interface. When the designated application obtains the interface link of the application interface, the designated application can interact with the public transportation application to obtain the application interface, thereby displaying the application interface.

In the embodiment of the present disclosure, only the designated application actively obtains the application interface as an example. In another embodiment, the designated application may invoke the interface provided by the public transportation application based on the interface link, and pull the application interface from the public transportation application.

In another embodiment, in the case where the indication information is associated with the activation entry of the virtual ride card, when the designated application receives the triggering instruction for the indication information, an activation entry associated with the indication information is obtained and an activation request carrying the activation entry is sent to the public transportation application. When the public transportation application receives the activation request, the virtual ride card is activated through the activation entry.

In the method provided by the embodiment of the present disclosure, by obtaining current status information of an electronic device through the designated application, obtaining indication information when the status information satisfies public transportation travel conditions, wherein the indication information is used to indicate a manner of performing a resource transfer operation when the user rides on a public transportation vehicle, and displaying the indication information on a designated interface, the manner of performing the resource transfer operation can be determined by the displayed indication information when the user needs to take the public transportation vehicle, thereby performing the resource transfer operation to facilitate the user to take the public transportation vehicle. The user does not need to perform multiple steps, thereby improving the operation efficiency and reducing the requirements for users.

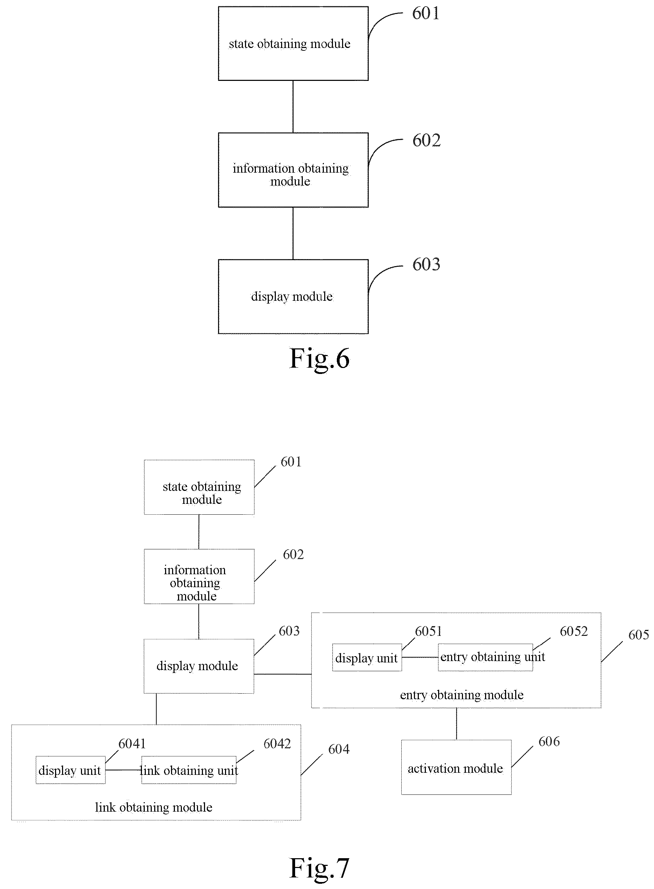

FIG. 6 is a schematic structural diagram of a device for displaying indication information according to an exemplary embodiment. Referring to FIG. 6, the device includes: a state obtaining module 601, an information obtaining module 602, and a display module 603.

The state obtaining module 601 is configured to obtain current state information of an electronic device;
The information obtaining module 602 is configured to obtain indication information when the status information satisfies public transportation travel conditions, wherein the indication information is used to indicate a manner of performing a resource transfer operation when the user rides on a public transportation vehicle;
The display module 603 is configured to display indication information on the designated interface.

In the device provided in the embodiments of the present disclosure, by obtaining current status information of an electronic device, obtaining indication information, when the status information satisfies public transportation travel conditions, wherein the indication information is used to indicate a manner of performing a resource transfer operation when the user rides on a public transportation vehicle, and displaying the indication information on a designated interface, the manner of performing the resource transfer operation can be determined by the displayed indication information when the user needs to take the public transportation vehicle, thereby performing the resource transfer operation to facilitate the user to take the public transportation vehicle. The user does not need to perform multiple steps, thereby improving the operation efficiency and reducing the requirements for users.

In one possible implementation, the status information satisfies the public transportation travel conditions including at least one of the following:
current time belongs to a preset time period;
a current location is within a preset range of a start station in travel habit information, and the travel habit information includes a start station and an ending station of the public transportation vehicle;
a current motion state is a state of not riding.

In another possible implementation, the indication information is a ride graphic code for performing a resource transfer operation when the user rides on the public transportation vehicle.

In another possible implementation, referring to FIG. 7, the device further includes:
a link obtaining module 604, configured to obtain an interface link associated with the indication information when receiving a triggering instruction for the indication information.

Wherein the display module 603 is further configured to display an application interface corresponding to the interface link, wherein the application interface includes the ride graphic code for performing a resource transfer operation when the user rides on the public transportation vehicle.

In another possible implementation manner, the link obtaining module 604 includes:
a display unit 6041, configured to display prompt information when a triggering instruction for the indication information is received for the first time, wherein the prompt information is used to prompt the application interface associated with the indication information to be displayed on the designated interface; and
a link obtaining unit 6042, configured to obtain the interface link associated with the indication information, when a confirmation operation on the prompt information is detected.

In another possible implementation, the device further includes:
an entry obtaining module 605, configured to obtain an activation entry associated with the indication information, when the triggering instruction for the indication information is received; and
an activation module 606, configured to activate a virtual ride card for performing the resource transfer operation when the user rides on the public transportation vehicle through the activation entry.

In another possible implementation, the entry obtaining module 605 includes:
a display unit 6051, configured to display the prompt information, when the triggering instruction for the indication information is received for the first time, wherein the prompt information is used to prompt activating the virtual ride card associated with the indication information; and
an entry obtaining unit 6052, configured to obtain the activation entry associated with the indication information when the confirmation operation on the prompt information is detected.

It should be noted that, when the device for displaying the indication information provided by the foregoing embodiment displays the indication information, only the division of the above functional modules is illustrated. In practical applications, the above functions can be assigned to be completed by different functional modules as needed, that is, the internal structure of the electronic device is divided into different functional modules to complete all or part of the functions described above. In addition, the device for displaying the indication information and the method for displaying the indication information provided by the foregoing embodiments belong to the same idea, the specific implementation process is described in detail in the method embodiment, and details are not described herein again.

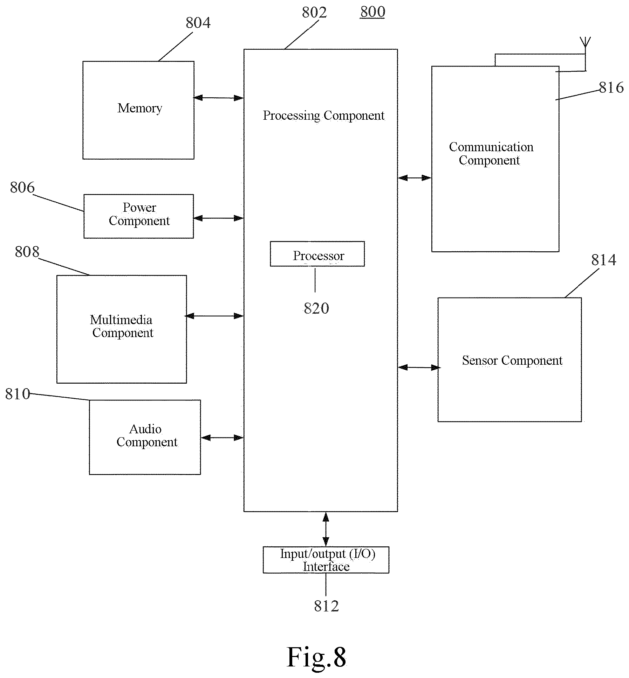

FIG. 8 is a block diagram of an electronic device according to an exemplary embodiment. For example, the electronic device 800 a mobile phone, a computer, a digital broadcast terminal, a message transceiver, a gaming console, a tablet device, a medical device, a fitness device, a personal digital assistant, or the like.

Referring to FIG. 8, the electronic device 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls the overall operations of the electronic device 800, such as the operations associated with display, telephone calls, data communications, camera operations, and recording operations. The processing component 802 can include one or more processors 820 to execute instructions to perform all or part of the steps in the above described methods. Moreover, the processing component 802 can include one or more modules to facilitate the interaction between the processing component 802 and other components. For example, the processing component 802 can include a multimedia module to facilitate the interaction between the multimedia component 808 and the processing component 802.

The memory 804 is configured to store various types of data to support the operation of the electronic device 800. Examples of such data include instructions for any application or method operated on device 800, such as the contact data, the phone book data, messages, pictures, videos, and the like. The memory 804 can be implemented by any type of volatile or non-volatile storage device, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the electronic device 800. The power component 806 can include a power management system, one or more power sources, and other components associated with the generation, management, and distribution of power in the electronic device 800.

The multimedia component 808 includes a screen providing an output interface between the electronic device 800 and the user. In some embodiments, the screen can include a liquid crystal display (LCD) and a touch panel (TP). If the screen includes the touch panel, the screen can be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. When the electronic device 800 is in an operation mode, such as a photographing mode or a video mode, the front camera and/or the rear camera can receive external multimedia datum. Each of the front camera and the rear camera may be a fixed optical lens system or have focus and optical zoom capability.

The audio component 810 is configured to output and/or input an audio signal. For example, the audio component 810 includes a microphone (MIC) configured to receive an external audio signal when the electronic device 800 is in an operation mode, such as a call mode, a recording mode, and a voice recognition mode. The received audio signal may be further stored in the memory 804 or transmitted via the communication component 816. In some embodiments, the audio component 810 also includes a speaker for outputting the audio signal.

The I/O interface 812 provides an interface between the processing component 802 and peripheral interface modules, such as a keyboard, a click wheel, buttons, and the like. These buttons may include, but are not limited to, a home button, a volume button, a starting button, and a locking button.

The sensor component 814 includes one or more sensors for providing status assessments of various aspects of the electronic device 800. For example, the sensor component 814 can detect an open/closed status of the electronic device 800, relative positioning of components, for example the components are the display and the keypad of the electronic device 800. The sensor component 814 can also detect a change in position of one component of the electronic device 800 or the electronic device 800, the presence or absence of user contact with the electronic device 800, an orientation, or an acceleration/deceleration of the electronic device 800, and a change in temperature of the electronic device 800. The sensor component 814 can include a proximity sensor configured to detect the presence of nearby objects without any physical contact. The sensor component 814 can also include a light sensor, such as a CMOS or CCD image sensor, configured to use in imaging applications. In some embodiments, the sensor component 814 can also include an accelerometer sensor, a gyroscope sensor, a magnetic sensor, a pressure sensor, or a temperature sensor.

The communication component 816 is configured to facilitate wired or wireless communication between the electronic device 800 and other devices. The electronic device 800 can access a wireless network based on a communication standard, such as WiFi, 2G, 3G, 4G or 5G, or a combination thereof. In an exemplary embodiment, the communication component 816 receives broadcast signals or broadcast associated information from an external broadcast management system via a broadcast channel. In an exemplary embodiment, the communication component 816 also includes a near field communication (NFC) module to facilitate short-range communications.

In an exemplary embodiment, the electronic device 800 may be implemented with one or more application specific integrated circuits (ASICs), digital signal processors (DSPs), digital signal processing devices (DSPDs), programmable logic devices (PLDs), field programmable Gate array (FPGA), controller, microcontroller, microprocessor or other electronic components to perform the above method.

In an exemplary embodiment, there is also provided a non-transitory computer- readable storage medium including instructions, such as a memory 804 including instructions executable by the processor 820 of the electronic device 800 to perform the above described method. For example, the non-transitory computer readable storage medium may be a ROM, a random access memory (RAM), a CD-ROM, a magnetic tape, a floppy disc, and an optical data storage device.

Other embodiments of the present disclosure will be apparent to those skilled in the art from consideration of the specification and practice of the present disclosure disclosed herein. The present application is intended to cover any variations, uses, or adaptations of the present disclosure, which are in accordance with the general principles of the present disclosure and include common general knowledge or conventional technical means in the art that are not disclosed in the present disclosure. The specification and embodiments are illustrative, and the real scope of the present disclosure is defined by the appended claims.

## Claims

1. A method for displaying indication information implemented in an electronic device, comprising:
obtaining (201, 301), by the electronic device, current status information of the electronic device, wherein the current status information of the electronic device comprises at least one of location information indicating a current location of the electronic device, time information indicating a current time of the electronic device, and motion information indicating a current motion state of the electronic device;
determining (302), by the electronic device, whether the current status information satisfies public transportation travel conditions, wherein the public transportation travel conditions are used for determining that a user of the electronic device is to ride a public transportation vehicle;
obtaining (202, 303), by the electronic device, indication information upon the status information satisfying the public transportation travel conditions, wherein the indication information is used to indicate a manner of performing a payment operation when the user rides on a public transportation vehicle, and wherein the indication information is a ride graphic code of a third-party application through which the user performs the payment operation when the user rides on the public transportation vehicle;
storing (304) the indication information in a storage space of the electronic device associated with a designated interface of the electronic device, the designated interface being a minus one screen; and
in response to detecting a right sliding operation on a main interface of the electronic device, switching from displaying the main interface to displaying (305) the minus one screen and displaying the ride graphic code of the third-party application on the minus one screen without opening the third-party application.

2. The method according to claim 1, wherein the status information satisfying the public transportation travel conditions comprises at least one of the following:
current time belongs to a preset time period;
a current location is within a preset range of a start station in travel habit information, and the travel habit information comprises a start station and an ending station of the public transportation vehicle; and
a current motion state is a state of not riding.

3. A device for displaying indication information, comprising:
a state obtaining module (601), configured to obtain current state information of an electronic device, wherein the current status information of the electronic device comprises at least one of location information indicating a current location of the electronic device, time information indicating a current time of the electronic device, and motion information indicating a current motion state of the electronic device;
an determining module, configured to determine whether the current status information satisfies public transportation travel conditions, wherein the public transportation travel conditions are used for determining that a user of the electronic device is to ride a public transportation vehicle;
an information obtaining module (602), configured to obtain indication information upon the status information satisfying the public transportation travel conditions, wherein the indication information is used to indicate a manner of performing a payment operation when the user rides on a public transportation vehicle, and wherein the indication information is a ride graphic code of a third-party application through which the user performs the payment operation when the user rides on the public transportation vehicle;
a storing module, configured to store the indication information in a storage space of the electronic device associated with a designated interface of the electronic device, the designated interface being a minus one screen; and
a display module (603), configured to switch from displaying a main interface to displaying the minus one screen and displaying the ride graphic code of the third-party application on the minus one screen without opening the third-party application, in response to detecting a right sliding operation on the main interface of the electronic device,.

4. The device according to claim 3, wherein the status information satisfying public transportation travel conditions comprises at least one of the following:
current time belongs to a preset time period;
a current location is within a preset range of a start station in travel habit information, and the travel habit information comprises a start station and an ending station of the public transportation vehicle; and
a current motion state is a state of not riding.

5. A computer readable storage medium, wherein at least one instruction stored therein is loaded and executed by a processor to implement operations performed in the method for displaying indication information according to any of claims 1 to 2.

## Patentansprüche

1. Verfahren zum Anzeigen von Angabeinformationen, das in einer elektronischen Vorrichtung implementiert ist, umfassend:
Erfassen (201, 301), mittels der elektronischen Vorrichtung, von Informationen über den aktuellen Status der elektronischen Vorrichtung, wobei die Informationen über den aktuellen Status der elektronischen Vorrichtung mindestens eines umfassen aus Standortinformationen, die einen aktuellen Standort der elektronischen Vorrichtung angeben, Zeitinformationen, die eine aktuelle Zeit der elektronischen Vorrichtung angeben, und Bewegungsinformationen, die einen aktuellen Bewegungszustand der elektronischen Vorrichtung angeben;
Bestimmen (302), mittels der elektronischen Vorrichtung, ob die Informationen über den aktuellen Status die Reisebedingungen für öffentliche Verkehrsmittel erfüllen, wobei die Reisebedingungen für öffentliche Verkehrsmittel verwendet werden, um zu bestimmen, dass ein Benutzer der elektronischen Vorrichtung mit einem öffentlichen Verkehrsmittel fahren wird;
Erfassen (202, 303), mittels der elektronischen Vorrichtung, von Angabeinformationen, sobald die Statusinformationen die Reisebedingungen für öffentlichen Verkehrs erfüllen, wobei die Angabeinformationen verwendet werden, um eine Art und Weise der Durchführung eines Zahlungsvorgangs anzuzeigen, wenn der Benutzer mit einem öffentlichen Verkehrsmittel fährt, und wobei die Angabeinformationen ein Fahrgrafikcode einer Drittanbieteranwendung sind, über die der Benutzer den Zahlungsvorgang durchführt, wenn der Benutzer mit dem öffentlichen Verkehrsmittel fährt;
Speichern (304) der Angabeinformationen in einem Speicherraum der elektronischen Vorrichtung, der mit einer designierten Schnittstelle der elektronischen Vorrichtung verbunden ist, wobei die designierte Schnittstelle ein Minus-Eins-Bildschirm ist; und
als Reaktion auf das Erkennen eines Rechtswischvorgangs auf einer Hauptschnittstelle der elektronischen Vorrichtung, Umschalten von der Anzeige der Hauptschnittstelle auf die Anzeige (305) des Minus-Eins-Bildschirms und Anzeigen des Fahrgrafikcodes der Drittanbieteranwendung auf dem Minus-Eins-Bildschirm ohne Öffnen der Drittanbieteranwendung.

2. Verfahren nach Anspruch 1, wobei die Statusinformationen, welche die Reisebedingungen für öffentliche Verkehrsmittel erfüllen, mindestens eines aus Folgendem umfassen:
die aktuelle Zeit gehört zu einem voreingestellten Zeitraum;
ein aktueller Standort liegt innerhalb eines voreingestellten Bereichs einer Startstation in Fahrgewohnheitsinformationen, und die Fahrgewohnheitsinformationen umfassen eine Startstation und eine Endstation des öffentlichen Verkehrsmittels; und
ein aktueller Bewegungszustand ist ein Zustand des Nichtfahrens.

3. Vorrichtung zum Anzeige von Angabeinformationen, aufweisend:
ein Statuserfassungsmodul (601), das dazu ausgebildet ist, Informationen über den aktuellen Status einer elektronischen Vorrichtung zu erfassen, wobei die Informationen über den aktuellen Status der elektronischen Vorrichtung mindestens eines umfassen aus Standortinformationen, die einen aktuellen Standort der elektronischen Vorrichtung angeben, Zeitinformationen, die eine aktuelle Zeit der elektronischen Vorrichtung angeben, und Bewegungsinformationen, die einen aktuellen Bewegungszustand der elektronischen Vorrichtung angeben;
ein Bestimmungsmodul, das dazu ausgebildet ist, zu bestimmen, ob die Informationen über den aktuellen Status die Reisebedingungen für öffentliche Verkehrsmittel erfüllen, wobei die Reisebedingungen für öffentliche Verkehrsmittel verwendet werden, um zu bestimmen, dass ein Benutzer der elektronischen Vorrichtung mit einem öffentlichen Verkehrsmittel fahren wird;
ein Informationserfassungsmodul (602), das dazu ausgebildet ist, Angabeinformationen zu erfassen, sobald die Statusinformationen die Reisebedingungen für öffentlichen Verkehrs erfüllen, wobei die Angabeinformationen verwendet werden, um eine Art und Weise der Durchführung eines Zahlungsvorgangs anzuzeigen, wenn der Benutzer mit einem öffentlichen Verkehrsmittel fährt, und wobei die Angabeinformationen ein Fahrgrafikcode einer Drittanbieteranwendung sind, über die der Benutzer den Zahlungsvorgang durchführt, wenn der Benutzer mit dem öffentlichen Verkehrsmittel fährt;
ein Speichermodul, das dazu ausgebildet ist, die Angabeinformationen in einem Speicherraum der elektronischen Vorrichtung zu speichern, der mit einer designierten Schnittstelle der elektronischen Vorrichtung verbunden ist, wobei die designierte Schnittstelle ein Minus-Eins-Bildschirm ist; und
ein Anzeigemodul, (603), das dazu ausgebildet ist, von der Anzeige der Hauptschnittstelle auf die Anzeige des Minus-Eins-Bildschirms und die Anzeige des Fahrgrafikcodes der Drittanbieteranwendung auf dem Minus-Eins-Bildschirm ohne Öffnen der Drittanbieteranwendung zu wechseln, und zwar als Reaktion auf das Erkennen eines Rechtswischvorgangs auf einer Hauptschnittstelle der elektronischen Vorrichtung.

4. Vorrichtung nach Anspruch 3, wobei die Statusinformationen, welche die Reisebedingungen für öffentliche Verkehrsmittel erfüllen, mindestens eines aus Folgendem umfassen:
die aktuelle Zeit gehört zu einem voreingestellten Zeitraum;
ein aktueller Standort liegt innerhalb eines voreingestellten Bereichs einer Startstation in Fahrgewohnheitsinformationen, und die Fahrgewohnheitsinformationen umfassen eine Startstation und eine Endstation des öffentlichen Verkehrsmittels; und
ein aktueller Bewegungszustand ist ein Zustand des Nichtfahrens.

5. Computerlesbares Speichermedium, wobei mindestens eine darin gespeicherte Anweisung geladen und von einem Prozessor ausgeführt wird, um Vorgänge zu implementieren, die in dem Verfahren zum Anzeigen von Angabeinformationen nach einem der Ansprüche 1 bis 2 durchgeführt werden.

## Revendications

1. Procédé d'affichage d'informations d'indication mis en œuvre dans un dispositif électronique, comprenant les étapes consistant à :
obtenir (201, 301), par le dispositif électronique, des informations d'état courant du dispositif électronique, dans lequel les informations d'état courant du dispositif électronique comprennent au moins des informations parmi des informations de position indiquant une position courante du dispositif électronique, des informations temporelles indiquant un temps courant du dispositif électronique, et des informations de mouvement indiquant un état de mouvement courant du dispositif électronique ;
déterminer (302), par le dispositif électronique, si les informations d'état courant satisfont des conditions de déplacement en transport public, dans lequel les conditions de déplacement en transport public sont utilisées pour déterminer le fait qu'un utilisateur du dispositif électronique circule dans un véhicule de transport public ;
obtenir (202, 303), par le dispositif électronique, des informations d'indication concernant les informations d'état qui satisfont les conditions de déplacement en transport public, dans lequel les informations d'indication sont utilisées pour indiquer une manière d'exécution d'une opération de paiement lorsque l'utilisateur circule dans un véhicule de transport =- public, et dans lequel les informations d'indication sont un code graphique de circulation d'une application tierce par l'intermédiaire de laquelle l'utilisateur effectue l'opération de paiement lorsque l'utilisateur circule dans le véhicule de transport public ;
mémoriser (304) les informations d'indication dans un espace de mémorisation du dispositif électronique associé à une interface désignée du dispositif électronique, l'interface désignée étant un écran d'ordre moins un ; et
en réponse à la détection d'une opération de glissement vers la droite sur une interface principale du dispositif électronique, commuter d'un affichage de l'interface principale pour afficher (305) l'écran d'ordre moins un et pour afficher le code graphique de circulation de l'application tierce sur l'écran d'ordre moins un sans ouvrir l'application tierce.

2. Procédé selon la revendication 1, dans lequel les informations d'état satisfaisant les conditions de déplacement en transport public comprennent au moins l'une des conditions suivantes parmi :
un temps courant appartient à une période de temps prédéfinie ;
une position courante est située dans une distance prédéfinie d'une station de départ dans des informations d'habitude de déplacement, et les informations d'habitude de déplacement comprennent une station de départ et une station d'arrivée du véhicule de transport public ; et
un état de mouvement courant est un état autre que de circulation.

3. Dispositif d'affichage d'informations d'indication, comprenant :
un module d'obtention d'état (601), configuré pour obtenir des informations d'état courant d'un dispositif électronique, dans lequel les informations d'état courant du dispositif électronique comprennent au moins des informations parmi des informations de position indiquant une position courante du dispositif électronique, des informations temporelles indiquant un temps courant du dispositif électronique, et des informations de mouvement indiquant un état de mouvement courant du dispositif électronique ;
un module de détermination, configuré pour déterminer si les informations d'état courant satisfont des conditions de déplacement en transport public, dans lequel les conditions de déplacement en transport public sont utilisées pour déterminer le fait qu'un utilisateur du dispositif électronique circule dans un véhicule de transport public ;
un module d'obtention d'informations (602), configuré pour obtenir des informations d'indication concernant les informations d'état qui satisfont les conditions de déplacement en transport public, dans lequel les informations d'indication sont utilisées pour indiquer une manière d'effectuer une opération de paiement lorsque l'utilisateur circule dans un véhicule de transport public, et dans lequel les informations d'indication sont un code graphique de circulation d'une application tierce par l'intermédiaire de laquelle l'utilisateur effectue l'opération de paiement lorsque l'utilisateur circule dans le véhicule de transport public ;
un module de mémorisation, configuré pour mémoriser les informations d'indication dans un espace de mémorisation du dispositif électronique associé à une interface désignée du dispositif électronique, l'interface désignée étant un écran d'ordre moins un ; et
un module d'affichage (603), configuré pour commuter d'un affichage d'une interface principale pour afficher l'écran d'ordre moins un et pour afficher le code graphique de circulation de l'application tierce sur l'écran d'ordre moins un sans ouvrir l'application tierce, en réponse à la détection d'une opération de glissement vers la droite sur l'interface principale du dispositif électronique.

4. Dispositif selon la revendication 3, dans lequel les informations d'état satisfaisant des conditions de déplacement en transport public comprennent au moins l'une des conditions suivantes parmi :
un temps courant appartient à une période de temps prédéfinie ;
une position courante est située dans une distance prédéfinie d'une station de départ dans des informations d'habitude de déplacement, et les informations d'habitude de déplacement comprennent une station de départ et une station d'arrivée du véhicule de transport public ; et
un état de mouvement courant est un état autre que de circulation.

5. Support d'informations lisible par ordinateur, dans lequel au moins une instruction mémorisée en son sein est chargée et exécutée par un processeur pour effectuer des opérations mises en œuvre dans le procédé d'affichage d'informations d'indication selon l'une ou l'autre des revendications 1 et 2.
